Europäisches Patentamt

European Patent Office

Office européen des brevets

(11) Publication number: **0 062 475**

**B1**

(12) **EUROPEAN PATENT SPECIFICATION**

(45) Date of publication of patent specification: **29.01.86**

(51) Int. Cl.⁴: **C 10 L 1/32, B 01 F 17/00**

(21) Application number: **82301645.6**

(22) Date of filing: **29.03.82**

(54) Surfactant compositions, preparation and stabilization of coal in oil mixtures.

(30) Priority: **30.03.81 US 248920**

(43) Date of publication of application:
**13.10.82 Bulletin 82/41**

(45) Publication of the grant of the patent:
**29.01.86 Bulletin 86/05**

(84) Designated Contracting States:
**CH DE FR GB LI NL SE**

(56) References cited:
**GB-A- 705 117**
**GB-A- 809 657**
**GB-A- 819 035**
**GB-A-1 252 728**
**US-A-4 130 401**
**US-A-4 251 229**
**US-A-4 252 540**

**PATENTS ABSTRACTS OF JAPAN, vol. 2, no. 117, 29th September 1978, page 2326C78**
**PATENTS ABSTRACTS OF JAPAN, vol. 5, no. 28(C-44)(700), 20th February 1981**

(73) Proprietor: **MONSANTO COMPANY Patent Department 800 North Lindbergh Boulevard St. Louis, Missouri 63166 (US)**

(72) Inventor: **Dolan, Michael John 802 LaBonne Parkway Manchester Missouri 63011 (US)**

(74) Representative: **McLean, Peter et al Monsanto Europe S.A. Patent Department Avenue de Tervuren 270-272 Letter Box No 1 B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to very highly concentrated liquid surfactant compositions and a method of producing such compositions which contain a nonionic component, an alkanolamine-containing anionic component and not more than about 10% by weight solvent. The highly concentrated liquid surfactant compositions are useful where concentrated mixtures of nonionic/anionic components are desired. They are particularly useful in the method of stabilizing coal in fuel oil mixtures of this invention.

Surfactant mixtures are well known in the art. Typically such compositions are useful in detergent applications and contain surfactants which are anionic, nonionic, mixed anionic-nonionic or zwitterionic in nature. These compositions contain significant amounts of solvent, usually water and/or alcohol and frequently contain a hydrotrope or solubilising agent. The solvents are required to obtain homogeneous, fluid compositions as well as to facilitate formulation of such mixtures. This requirement limits the active content of known surfactant mixtures and thus their volume usage/performance ratio.

U.S. Pat. No. 3,867,316 describes a process for manufacturing flowable pasty detergents capable of being pumped containing 60 to 70 weight percent of active substance of organic sulfuric or sulfonic acids neutralised with alkalies. U.S. Pat. No. 3,928,249 describes liquid, aqueous, detergent compositions containing from 2 to 15% by weight solubilising agents. Also, U.S. Pat. No. 4,235,758 describes clear, liquid detergent compositions containing 30—55% by weight of an active detergent mixture.

GB—A—809.657 describes an emulsifier mixture for emulsifying water immiscible organic solvents comprising about 50 to 90 parts by weight of a water-soluble synthetic nonionic surface active agent containing a polyoxyalkylene chain of at least 2 alkenoxy groups and derived from an alkyl phenolic compound in which the total number of alkyl carbon atom is from 4 to 24, and about 10 to 50 parts by weight of the cyclohexylammonium salt of an alkylbenzene sulphonic acid containing at least one alkyl group of at least three carbon atoms.

US—A—3,709,838 describes essentially 100% active stable liquid detergent compositions consisting essentially of (a) from 3 to 90% of an ethanolamine salt of a $C_8$ to $C_{18}$ alkylbenzene or alkyl-toluene-sulphonic acid, (b) from 5 to 33% of a nonionic normally liquid, water-soluble surfactant in the form of an ethoxylated or propoxylated ether of (i) an aliphatic monohydric alcohol containing at least 8 carbon atoms or (ii) an alkylphenol in which the alkyl radical contains a total of from 5 to 18 carbon atoms, and (c) from 5 to 35% of a $C_{10}$ to $C_{16}$ fatty acid monoethanolamide, diethanolamide or monoisopropanolamide.

"Patent Abstracts of Japan" Vol. 5, No. 28 (C-44) (700), JP—A—55 152 789 describes an additive for pulverised coal-oil mixture made by blending (a) a salt of mono- or dialkyl sulfosuccinate having 6—10C alkyl group with (b) a sodium, potassium or amine salt of alkylbenzenesulfonic acid having 8—18C alkyl group, in a weight ratio a/b of 95/5—60/40.

Other surfactants useful in the preparation of coal in fuel oil mixtures are described in U.S. Pat. Nos. 4,130,401 and 4,162,143. In the preparation of such coal in fuel oil mixtures, it is highly desirable to use effective surfactant compositions which are concentrated, homogeneous, fluid, stable to freeze/thaw conditions and easily dispensable. Such concentrated surfactant compositions facilitate the preparation of coal in fuel oil mixtures in the extremely large volumes required as an alternative fuel useful in fuel oil burning equipment. Stable, concentrated surfactant compositions, for example, can be readily metered into an admixture of coal and fuel oil with agitation using batch processing techniques or continuous processing techniques employing in-line mixers.

Accordingly, an advantage of the present invention is providing liquid compositions of anionic and nonionic surfactants which have very high active contents and do not require solubilising agents to maintain homogeneous, fluid properties and have superior volume usage/performance ratios.

A further advantage of this invention is providing a process for preparing such compositions which is efficient, direct and avoids the usual requirement for a substantial proportion of diluent solvent in the production of anionic/nonionic mixtures.

An additional advantage of the present invention is providing such high active surfactant compositions which are chemically and physically stable and are particularly useful in the preparation of pulverized coal in fuel oil mixtures which can be used as an alternative fuel.

It has been discovered that by employing certain anionic and nonionic surfactants in a preferred manufacturing process, these above described advantages are attained and very high active content surfactant compositions can be prepared which are unexpectedly superior to surfactant mixtures presently known in the art.

Summary of the invention

These and other advantages are obtained by the liquid surfactant compositions of the present invention which consist essentially of:

(A) a nonionic component of alkylphenol polyoxyalkylene ether;

(B) an anionic component of alkanolamine salt of alkylaryl sulfonic acid; and

(C) not more than about 10 weight percent solvent, wherein the weight ratio of (A) to (B) varies between about 1 to 3 to about 3 to 1.

2

# 0 062 475

These surfactant compositions are prepared by the process of this invention which comprises admixing a nonionic alkylaryl polyoxyalkylene ether and alkylaryl sulfonic acid and adding to the admixture mono-, di- or tri-$C_{1-3}$ alkanolamine in an amount sufficient to neutralize the alkylaryl sulfonic acid.

This in situ neutralization with an alkanolamine of the alkylaryl sulfonic acid in admixture with the alkylaryl polyoxyalkylene ether is particularly advantageous in that all components are in a fluid state and thus readily dispersed and handled.

The method of preparing coal in fuel oil mixtures of this invention comprises admixing about 30 to about 50 parts by weight pulverized coal, about 50 to 70 parts by weight fuel oil, not more than about 10 parts by weight of water and a sufficient amount to stabilize the coal in the oil of the above liquid surfactant compositions of this invention.

Detailed description of the invention

The nonionic component of the liquid surfactant compositions are conventional nonionic surfactants of the alkylaryl polyoxyalkylene ether type. The polyalkylene oxide condensates of alkylphenols are particularly useful. These components include products of alkylphenols having an alkyl group containing from about 8 to about 12 carbon atoms in either a straight or branched chain configuration, i.e., $C_{8-12}$ alkylphenols, with about 4 to about 12 moles of alkylene oxide containing 2 or 3 carbon atoms, i.e., $C_{2-3}$ alkylene oxide, preferably ethylene oxide. Especially preferred are alkylphenol polyoxyethylene ethers wherein the alkylphenol has 8—9 alkylene carbon atoms and is condensed with 4—10 moles of ethylene oxide and also where the alkylphenol has 12 carbon atoms in the alkylene chain and is condensed with 6—10 moles of ethylene oxide.

Examples of nonionic components of this type which are commercially available include nonylphenol condensed with an average of 10 moles of ethylene oxide, dodecylphenol condensed with an average of 6 moles ethylene oxide, and octylphenol condensed with an average of 8 moles of ethylene oxide. Similar alkylphenols condensed with propylene oxide can be employed.

The anionic component of the surfactant compositions of this invention are alkanolamine alkylaryl sulfonates which can be generated in situ in accordance with the process of this invention by the reaction of a $C_{1-3}$ alkanolamine and an alkylaryl sulfonic acid using the nonionic component of the surfactant composition as the medium for reaction. The commercially available alkylaryl sulfonic acids derived from alkylbenzenes having average molecular weight ranges of 231—241, wherein the dominant alkyl chain length is $C_{11}$; 238—248, wherein the dominant alkyl chain length is $C_{12}$; 258—266, wherein the dominant alkyl chain length is $C_{13}$; and 300—400, which are viscous liquid by-products of alkylbenzene manufacture, for example 335 average molecular weight wherein the total number of carbons in the alkyl portion averages about 15; which are hereinafter referred to as alkylaryl sulfonic acids wherein the average carbon number of the alkyl chains varies from about 10 to 15, i.e., $C_{10-15}$ alkylbenzenes, are preferred. Especially preferred are the alkylbenzene sulfonic acids with an average alkyl chain length, either straight or branched chain, of about $C_{11-13}$. An example of this type of sulfonic acid is dodecylbenzene sulfonic acid. Preferred alkanolamines are monoethanolamine, diethanolamine, triethanolamine and mixtures thereof. Other alkanolamines having 1 to 3 carbon atoms in the alkanol portion, i.e., mono-, di-, and tri-$C_{1-3}$ alkanolamines can be used.

The weight ratio of the nonionic component (A) to the anionic component (B) in the surfactant composition of this invention can vary over a broad range to tailor its surfactant properties in view of the desired use.

Preferably, the weight ratio of (A) to (B) varies between about 1 to 3 to about 3 to 1. Particularly preferred are surfactant compositions of 40 to 60% by weight of the anionic component (B) based on the total weight of (A) plus (B).

Although the surfactant compositions of the instant invention need only contain the above-described components to be easily prepared and liquid at 25°C, highly preferred compositions contain additionally a small amount of solvent, not more than about 10% by weight, to enhance their physical properties at low temperatures. Generally, such solvents comprise from about 5 to about 10% by weight of the total compositions. The physical properties at low temperature are improved by selected solvents which lower the clear points and which also improve the fluidity at lower temperatures which may be encountered during shipping or storing of the surfactant composition in the marketplace.

Preferred solvents vary somewhat as the structure and relative weight ratios of the components (A) and (B) of the surfactant compositions are varied. In general, lower molecular weight alkanolamine salts and anionic weight percentages of about 25% require less solvent and a wider range of solvents can be employed. Preferred solvents for mono- and diethanolamine sulfonates used at about 25% by weight are lower molecular weight alcohols, i.e., $C_{1-3}$ alcohols, especially methanol, ethanol, and isopropanol, formamide and mixtures thereof. Five percent by weight of these preferred solvents is typically sufficient to provide lower clear points and fluidity to the compositions.

Higher molecular weight alkanolamine sulfonates and compositions wherein the amount of the anionic component is greater than about 45% by weight benefit from a somewhat higher level of solvent. Especially preferred solvents for these compositions are methanol, ethanol, isopropanol, formamide and mixtures thereof at 5—10% by weight of the total compositions. Although water as a solvent does not enhance the properties of the surfactant compositions as well as the mentioned preferred solvents, water is

3

preferred for compositions wherein the anionic component is an alkanolamine salt of alkylaryl sulfonic acid derived from the above described alkylbenzene by-product having an average molecular weight of 335.

It will be recognized that other solvents may be employed in the surfactant compositions. In general, however, such common solvents as ethylene glycol, acetone, napthas, kerosene, higher alcohols, and aromatic solvents such as toluene and xylene, do not enhance the clear point or fluidity at lower temperatures as compared to preferred solvents.

The generally practiced and accepted method for preparing liquid anionic surfactants as well as liquid surfactant blends with high active content involves sequential addition of the various active components to a diluting solvent. In such liquid formulation the solvent is usually water and/or alcohol. Although the use of solvents facilitates mixing of these formulations, the relatively large amount of solvent required inherently limits the active content of the resultant finished composition. In addition, the amount and ratio of solvents often must be carefully controlled to avoid gel formation and phase separation.

The process of the present invention provides a substantial improvement over the aforementioned art for preparing high active content liquid mixtures of anionic and nonionic surfactants, while avoiding the need for diluent solvents during preparation and the problems of gel formation. In addition, it has been found that compositions prepared by the process of this invention unexpectedly exhibit excellent fluidity and physical and chemical stability. This process entails the preparation of alkanolamine sulfonates in the presence of the nonionic surfactant which serves as the reaction medium. In this manner, all of the raw materials are in liquid form and easily handled and metered. A particular advantage of this process is the avoidance of handling of concentrated alkanolamine sulfonate, which is typically waxy, hydroscopic and difficult to obtain in concentrated form. According to the present process, an alkylaryl sulfonic acid is added to a liquid nonionic surfactant of the aforementioned type and mixed well. The materials are essentially completely miscible over the range of composition described previously. Next, the required amount of alkanolamine, based upon desired stoichiometry, is added; a rapid rate of addition can be used. The resultant mixture of nonionic surfactant and alkanolamine sulfonate is mixed well and a suitable solvent can then be added if desired. The entire procedure is convenient, rapid, easily reproducible and affords a very homogeneous, fluid surfactant composition.

In the method of preparing coal in fuel oil mixtures of this invention, the pulverized coal can be prepared by techniques known to those skilled in the art. A standard coal pulverizing unit comminutes about 80 percent of the coal to less than 200 mesh U.S. Standard Sieve particles (less than about 74 microns) and the pulverized coal produced in such Standard units provides satisfactory results in the method of the present invention. However, as will occur to those skilled in the art, even finer coal particles will produce better dispersions in the fuel oil, but the cost of producing such finer coal frequently offsets the benefits of better dispersions.

As is known to those skilled in the art, the composition of coal can vary within rather wide limits, depending upon the seam from which it is mined, the mining technique used and other conditions. This variation in composition affects the performance of the surfactant compositions employed to stabilize the coal in fuel oil mixture and usually is adjusted for by selection of the proper nonionic and anionic component, the weight ratio thereof, the concentration of the surfactant composition based on the weight of the coal in fuel oil mixture as well as the concentration of the added water and the coal in the coal in fuel oil mixture. The optimum coal in fuel oil mixtures can be readily determined for a particular coal or oil by those skilled in the art by simply admixing the pulverized coal with the fuel oil, added water and the particular surfactant composition and determining the settling rate of the pulverized coal, using the procedure of Example XIII.

The fuel oil can also vary within wide limits, depending on the source of the oil, the refinery methods, and the like. Residual fuel oil, which is the product from refineries after lighter fractions used to make gasoline and other petroleum products have been removed, has been generally used as a fuel for firing boilers and other heat generating applications. Typically, fuel oil has a specific gravity at 15°C. of about 0.9, a boiling point of about 355°C, and a flash point of about 95°C. Of particular interest are fuel oils designated in the art as grades 4, 5 and 6 which are most often used in the stoking of boilers and the like. Grade number 6, such as, Bunker C fuel oil is particularly advantageous in view of its lower cost and commercial availability. The variation in the characteristics of the fuel oil does not affect the stability of the coal in fuel oil mixtures to the extent that coal affects the mixture.

Preferably, low levels of water can be admixed with the pulverized coal and fuel oil according to the present invention. Such low levels of water aid in the dispersion of the pulverized coal in the fuel oil. As those skilled in the art are aware, when greater than about 10 percent water, based on the weight of the coal and the oil, is used there is a loss of fuel value. However, when less than about 1 weight percent water based on the weight of the total mixture is used, no particular advantage is seen in the addition of the water. Coal in fuel oil mixtures of this invention containing between about 1 and about 5 weight percent added water are preferred.

The optimum nonionic and anionic components and the weight ratio thereof in the liquid surfactant compositions of this invention for any particular coal and oil can be readily determined by routine experimentation in view of the instant disclosure and the results provided in the examples below. The amount of the surfactant composition required to stabilize the coal in the oil can vary with the particular coal and oil. Although less than 0.1 weight percent of the surfactant composition will show some beneficial

4

# 0 062 475

effects, it is preferred to use at least 0.2 weight percent. For reasons of economy greater than 1 percent surfactant composition is not recommended, although such higher amounts are not detrimental. It is preferred to use less than 1 percent by weight, usually less than 0.5 weight percent of the surfactant composition, based on the total weight of the coal in fuel oil mixture.

Decription of preferred embodiments

This invention is further illustrated by, but not limited to, the following Examples wherein all parts and percentages are by weight unless otherwise indicated.

Example I

A surfactant composition of nonionic and anionic components in the weight ratio of 1 to 1 is prepared in the following manner:

An open mixing tank fitted with an agitator is charged with 2.01 kg of nonylphenol ethylene oxide condensate containing an average of 10 moles of ethylene oxide per mole of nonylphenol. With mixing, 1.37 kg of a sulfonic acid of a dodecylbenzene having an average molecular weight of 236 is added, whereupon a moderate temperature rise occurs. Next, 0.71 kg of triethanolamine is metered into the mixture at a uniform, relatively rapid rate. Final triethanolamine addition is controlled such that a 1% solution of the mixture has a pH value of 7—8. The finished mixture is a clear, homogeneous composition having an appoximate viscosity of 1800 cps (1.8 Pa·s) at 25°C. Then ethanol, as solvent, is added to the mixture to comprise 7.5% by weight of the total composition which improves its fluidity by reducing the viscosity to approximately 650 cps (.65 Pa·s) at 25°C.

The liquid surfactant composition of Example I is a homogeneous, clear, amber, liquid which is freeze/thaw stable. This composition is physically and chemically stable showing no phase separation or gelling upon standing at room temperature for 30 days or in the accelerated aging test for 5 days at 50°C and for 3 days at 0°C. At 0°C, this composition remains fluid and readily pumpable.

Substantially like fluidity and stability results were obtained with the replacement of the 7.5% ethanol with 7.5% (95%) ethanol, 10% methanol, 10% formamide and 10% of a mixture of equal parts of ethanol and formamide.

Example II

The procedure of Example I is repeated except that 1.69 kg of the dodecylbenzene sulfonic acid is used and 0.325 kg of monoethanolamine is substituted for triethanolamine. Using 7.5% by weight of 95% ethanol provides a clear, homogeneous, liquid surfactant composition having a clear point below 0°C. The composition is physically and chemically stable showing no phase separation or gelling upon standing at room temperature for 30 days or in accelerated aging test for 5 days at 50°C and for 3 days at 0°C. At 0°C, the composition remains fluid and readily pumpable.

Example III

The procedure of Example I is repeated except that 1.51 kg of dodecylbenzene sulfonic acid is used and 0.50 kg of diethanolamine is substituted for triethanolamine. Using 7.5% by weight of 95% ethanol provides a clear, homogeneous, liquid surfactant composition which is physically and chemically stable, showing no phase separation or gelling upon standing at room temperature for 30 days or in the accelerated aging tests described in Example I.

Example IV

The procedure of Example I is repeated except that a comparable amount of the sulfonic acid of a viscous liquid by-product of alkylbenzene manufacture having an average molecular weight of 335 is used in place of dodecylbenzene sulfonic acid. Using 10% by weight of water in place of 7.5% ethanol provides a dark, homogeneous, liquid, surfactant composition which is physically and chemically stable, showing no phase separation or gelling in the previously described aging tests.

Example V

The procedure of Example I is repeated except that a comparable amount of the sulfonic acid of an alkylbenzene having an average molecular weight of 261 is used in place of the dodecylbenzene of average molecular weight of 236. Using 7.5% by weight of 95% ethanol provides a homogeneous, liquid surfactant composition which is physically and chemically stable, showing no phase separation or gelling in the aging tests.

Example VI

The procedure of Example I is repeated except a like amount of nonylphenol ethylene oxide condensate containing an average of 4 moles of ethylene oxide per mole of nonylphenol is used in place of the condensate of 10 moles ethylene oxide. Using 10% by weight ethanol provides a homogeneous, liquid surfactant composition which has a clear point below 0°C and shows no phase separation or gelling in the aging tests.

5

Example VII

The procedure of Example I is repeated except that a like amount of dodecylphenol ethylene oxide condensate containing an average of 6 moles of ethylene oxide per mole of dodecylphenol is used in place of nonylphenol condensate of 10 moles ethylene oxide. Using 10% by weight ethanol provides a homogeneous, liquid surfactant composition having a clear point below 0°C and showing no phase separation or gelling in the aging tests.

Example VIII

The procedure of Example I is repeated except that a like amount of dodecylphenol ethylene oxide condensate containing an average of 9—10 moles of ethylene oxide per mole of dodecylphenol is used in place of the nonylphenol condensate of 10 moles of ethylene oxide. Using 10% by weight ethanol provides a homogeneous, liquid surfactant composition having a clear point below 0°C and showing no phase separation or gelling in the aging tests.

Example IX

A surfactant composition of nonionic and anionic components in the weight ratio of 3 to 1 was prepared using the procedure of Example I with 6 parts by weight of nonylphenol ethylene oxide condensate containing an average of 10 moles of ethylene oxide per mole of nonylphenol, 1.37 parts by weight of the sulfonic acid of dodecylbenzene having an average molecular weight of 236 and 0.7 parts by weight of triethanolamine. The addition of 5% by weight water, as solvent, provides a homogeneous, liquid surfactant composition having a clear point below 0°C. The composition is physically and chemically stable showing no phase separation or gelling in the aging tests.

Example X

A surfactant composition of nonionic and anionic components in the weight ratio of 1 to 3 was prepared using the procedure of Example 1 with 2 parts by weight of nonylphenol ethylene oxide condensate containing an average of 10 moles of ethylene oxide per mole of nonylphenol, 4 parts by weight of the sulfonic acid of dodecylbenzene, having an average molecular weight of 236 and 2 parts by weight of triethanolamine. The addition of 10% by weight ethanol, as solvent, provides a homogeneous, liquid surfactant composition which is physically and chemically stable showing no phase separation or gelling in the aging tests.

The highly concentrated surfactant compositions represented by the foregoing examples demonstrate highly effective compositions which are chemically and physically stable. The high-active level, at least 90% by weight, is particularly advantageous for processing other materials where the surfactant properties are desired in the formulation of e.g. detergents, cleaners or emulsions. The stability of these concentrated surfactant compositions distinguishes them from other nonionic/anionic concentrates as shown in Examples XI and XII.

Example XI

The procedure of Example I is repeated except that the alkanolamines used in compositions of Examples I through VIII were replaced by stoichiometric amounts of sodium hydroxide. The resultant mixtures for the most part exhibit adequate fluidity but all are cloudy and separate into phases upon storage at room temperature.

Example XII

The procedure of Example XI is repeated using magnesium oxide in place of the sodium hydroxide as replacement for the alkanolamines. The resultant mixtures solidify upon standing for several days at room temperature.

The highly advantageous properties of the liquid surfactant compositions for stabilizing pulverized coal in fuel oil mixtures of the present invention is demonstrated in the following example and tables.

Example XIII

A uniform solution is made by mixing 0.25 parts by weight of the surfactant composition with 2.0 parts by weight of water. This solution is then mixed with 67.75 parts by weight of a commercially available No. 6 (Bunker C) fuel oil using efficient stirring. Then, 30 parts by weight of a pulverized coal wherein about 70% of the coal is less than about 74 microns diameter are added and stirred until a smooth, lump-free slurry is obtained. The slurry is transferred into a thermostated glass column about 50 centimeters high and 2.5 centimeters in diameter and the mixture is left in a quiescent state for a certain period of time, typically 24, 48 or 96 hours, at a controlled temperature usually 60°C. At the end of this time, the percentage of coal in the bottom portion or top portion, or both, is determined and these measurements are used to evaluate the surfactant stabilizers.

In Table I are the results of slurry stability tests demonstrating the effectiveness of anionic triethanolamine salt of dodecylbenzene (MW 236) sulfonic acid (DBSA-TEA) and representative nonionic, nonylphenol ethylene oxide condensate containing 10 moles of ethylene oxide per mole of nonylphenol (NP10E0); with 4 moles of ethylene oxide (NP4E0); and dodecylphenol with 7 moles of ethylene oxide (DP7E0).

6

**0 062 475**

TABLE I
Coal-oil mixture stability 30% coal/2% added water/0.25% surfactant/24 hrs. at 60°C.

| Test | Surfactant Nonionic / Anionic | | Ratio | % Coal bottom | % Coal top | * |
|------|---------|-----------|-------|---------|---------|---|
| Control | — | — | — | 63.4 | 6.1 | 3 |
| 1 | — | DBSA-TEA | — | 38.0 | 18.6 | 2 |
| 2 | NP10E0 | — | — | 42.0 | 20.1 | 2 |
| 3 | NP4E0 | — | — | 58.6 | 17.2 | 3 |
| 4 | DP7E0 | — | — | 47.6 | 18.9 | 2 |
| 5 | NP10E0 / | DBSA-TEA | 1:3 | 33.2 | 23.8 | 1 |
| 6 | NP10E0 / | DBSA-TEA | 1:1 | 33.4 | 21.8 | 1 |
| 7 | NP10E0 / | DBSA-TEA | 3:1 | 34.3 | 21.2 | 1 |
| 8 | NP4E0 / | DBSA-TEA | 1:1 | 33.4 | 20.0 | 1 |
| 9 | DP7E0 / | DBSA-TEA | 1:3 | 33.3 | 22.4 | 1 |
| 10 | DP7E0 / | DBSA-TEA | 1:1 | 32.1 | 22.9 | 1 |
| 11 | DP7E0 / | DBSA-TEA | 3:1 | 34.1 | 22.0 | 1 |

*Redispersibility of Coal-Oil Mixture 1=readily redispersible, soft settling; 2=redispersible, medium settling; 3=hard packed, not redispersible.

Using the procedure of Example XIII, the advantages of using the surfactant composition for stabilizing coal in fuel oil mixtures over the effect of the added water alone is demonstrated in Table II.

7

### TABLE II
Coal-oil mixture stability 30% coal/2% water/0.25% surfactant/24 hrs. at 60°C.

| Surfactant composition | Coal type | % Coal bottom | % Coal top | % Improvement over water | |
|---|---|---|---|---|---|
| | | | | Bottom | Top |
| 2% Water | III.* | 56.0 | 10.7 | — | — |
| 2% Water | W. Va.** | 52.2 | 14.1 | — | — |
| Example I | III. | 33.4 | 21.8 | 87 | 58 |
| " | W. Va. | 31.4 | 24.9 | 94 | 68 |
| Example II | III. | 33.0 | 20.8 | 86 | 52 |
| " | W. Va. | 32.5 | 27.3 | 89 | 83 |
| Example III | III. | 31.7 | 21.7 | 93 | 57 |
| " | W. Va. | 32.9 | 28.8 | 87 | 92 |
| Example IV | III. | 32.0 | 26.8 | 92 | 83 |
| " | W. Va. | 30.8 | 28.4 | 96 | 90 |
| Example V | III. | 33.5 | 21.5 | 86 | 56 |
| " | W. Va. | 32.8 | 24.5 | 87 | 65 |

*Illinois #6 seam bituminous coal.
**West Virginia bituminous coal.

Similar improved results are obtained using the surfactant compositions to stabilize fuel oil mixtures containing Kentucky bituminous coal and Pennsylvania bituminous and sub-bituminous coal.

The advantages of the instant surfactant compositions at various coal levels in fuel oil mixtures is demonstrated in Table III.

### TABLE III
Coal-oil mixture stability 2% added water/0.25% surfactants

| Surfactants | 30% Coal 24 hrs./60°C | | 40% Coal 48 hrs./60°C | | 50% Coal 96 hrs./71°C | |
|---|---|---|---|---|---|---|
| | % Bottom | % Top | % Bottom | % Top | % Bottom | % Top |
| Control 2% Water | 56.0 | 10.7 | 59.6 | 21.2 | 63.9 | 29.0 |
| NP10E0 | 42.0 | 20.1 | 66.5 | 21.6 | 55.0 | 38.3 |
| DP7E0 | 47.6 | 18.9 | 66.5 | 21.9 | 63.1 | 24.5 |
| DBSA-TEA | 38.0 | 18.6 | 47.8 | 24.5 | 55.6 | 45.7 |
| Example I | 33.4 | 21.8 | 43.8 | 28.8 | 51.9 | 48.2 |
| Example VII | 32.1 | 22.9 | 43.4 | 29.6 | 52.0 | 50.0 |

*Illinois #6 seam bituminous coal.

Although the invention has been described in terms of specific embodiments which are set forth in considerable detail, it should be understood that this is by way of illustration only and that the invention is not necessarily limited thereto since alternative embodiments and operating techniques will become apparent to those skilled in the art in view of the disclosure. Accordingly, modifications are contemplated which can be made without departing from the spirit of the described invention.

8

**Claims**

1. A surfactant composition consisting essentially of:
(A) a nonionic component of alkylphenol polyoxyalkylene ether;
(B) an anionic component of an amine salt of alkylaryl sulfonic acid; and
(C) not more than 10 weight percent solvent.
wherein the weight ratio of (A):(B) is between 1:3 and 3:1, characterised in that the said amine salt is an alkanolamine salt and in that the surfactant composition is liquid.

2. A composition of Claim 1, wherein the alkylphenol polyoxyalkylene ether is selected from condensation products of $C_{8-12}$ alkylphenols condensed with an average in the range of 4 to 12 moles of $C_{2-3}$ alkylene oxide.

3. A composition of either Claim 1 or Claim 2, wherein the alkanolamine salt of alkylaryl sulfonic acid is selected from mono-, di- and tri-$C_{1-3}$ alkanolamine salts of $C_{10-15}$ alkylbenzene sulfonic acids, and mixtures thereof.

4. A composition of any of the preceding claims, wherein the solvent is selected from water, $C_{1-3}$ alcohols, formamide and mixtures thereof.

5. A composition of Claim 3, wherein the $C_{10-15}$ alkylbenzene has an average molecular weight in the range of 231 to 335.

6. A composition of any of the preceding claims, wherein (A) is nonylphenol condensed with an average of 10 moles ethylene oxide and (B) is triethanolamine salt of $C_{10-15}$ alkylbenzene sulfonic acid.

7. A composition of Claim 6, wherein the solvent is ethanol.

8. A composition of either Claim 6 or Claim 7, wherein the $C_{10-15}$ alkylbenzene has an average molecular weight in the range of 231 to 241.

9. A method of stabilizing pulverized coal in fuel oil mixtures by admixing coal, oil and a surfactant, characterised in that said method comprises admixing 30 to 50 parts by weight pulverised coal, 70 to 50 parts by weight fuel oil, not more than 10 parts by weight added water and at least 0.1 weight per cent of the mixture of a liquid surfactant composition comprising:
(A) a nonionic component of alkylphenol polyoxyalkylene ether;
(B) an anionic component of alkanolamine salt of alkylaryl sulfonic acid; and
(C) not more than 10 weight percent solvent,
wherein the weight ratio of (A):(B) is between 1:3 and 3:1.

10. A method of Claim 9, wherein the amount of the surfactive composition is not more than 1% by weight of the mixture.

11. A method of either Claim 9 or Claim 10, wherein in the amount of added water is from 1 to 5 percent by weight of the mixture.

12. A method of any of Claims 9 to 11, wherein the alkanolamine salt of alkylaryl sulfonic acid is selected from mono, di-, and tri-$C_{1-3}$ alkanolamine salts of $C_{10-15}$ alkylbenzene sulfonic acids, and mixtures thereof.

13. A stabilised mixture of coal and fuel oil, characterised in that it comprises 30 to 50 parts by weight pulverised coal, 70 to 50 parts by weight fuel oil, not more than 10 parts by weight added water and at least 0.1 weight percent of a surfactant composition comprising:
(A) a nonionic component of alkylphenol polyoxyalkylene ether;
(B) an anionic component of an alkanolamine salt of alkylaryl sulfonic acid; and
(C) not more than 10 weight per cent solvent,
wherein the weight ratio of (A):(B) is between 1:3 and 3:1.

14. A mixture of Claim 13, wherein the alkanolamine salt of alkylaryl sulfonic acid is selected from mono-, di-, and tri-$C_{1-3}$ alkanolamine salts of $C_{10-15}$ alkylbenzene sulfonic acids, and mixtures thereof.

15. A mixture of Claim 13 or Claim 14, wherein (A) is nonylphenol condensed with an average of 10 moles ethylene oxide and (B) is triethanolamine salt of $C_{10-15}$ alkylbenzene sulfonic acid.

**Patentansprüche**

1. Tensid-Zubereitung bestehend im wesentlichen aus
(A) einem nichtionischen Bestandteil in Form eines Alkylphenol-polyoxyalkylenethers;
(B) einer anionischen Komponente in Form eines Aminsalzes einer Alkylarylsulfonsäure; und
(C) nicht mehr als 10 Gew.-% eines Lösungsmittels,
wobei das Gewichtsverhältnis von (A):(B) zwischen 1:3 und 3:1 liegt, dadurch gekennzeichnet, daß das Aminsalz ein Alkanolaminsalz ist und die Tensid-Zubereitung flüssig ist.

2. Zubereitung nach Anspruch 1, dadurch gekennzeichnet, daß der Alkylphenol-polyoxyalkylenether aus Kondensationsprodukten von $C_{8-12}$-Alkylphenolen, die mit durchschnittlich 4 bis 12 Mol $C_{2-3}$-Alkylenoxid kondensiert worden sind, ausgewählt ist.

3. Zubereitung nach Anspruch 1 oder 2, dadurch gekennzeichnet, daß das Alkanolaminsalz der Alkylarylsulfonsäure aus Mono-, Di- und Tri-$C_{1-3}$-alkanolaminsalzen von $C_{10-15}$-Alkylbenzolsulfonsäuren und Mischungen davon ausgewählt ist.

4. Zubereitung nach einem der vorhergehenden Ansprüche, dadurch gekennzeichnet, daß das Lösungsmittel aus Wasser, $C_{1-3}$-Alkoholen, Formamid und Mischungen davon ausgewählt ist.

5. Zubereitung nach Anspruch 1, dadurch gekennzeichnet, daß das $C_{10-15}$-Alkylbenzol ein durchschnittliches Molekulargewicht im Bereich von 231 bis 335 aufweist.

6. Zubereitung nach einem der vorhergehenden Ansprüche, dadurch gekennzeichnet, daß sie als Bestandteil (A) mit durchschnittlich 10 Mol Ethylenoxid kondensiertes Nonylphenol und als Bestandteil (B) das Triethanolaminsalz von $C_{10-15}$-Alkylbenzolsulfonsäure enthält.

7. Zubereitung nach Anspruch 6, dadurch gekennzeichnet, daß sie als Lösungsmittel Ethanol enthält.

8. Zubereitung nach Anspruch 6 oder 7, dadurch gekennzeichnet, daß das $C_{10-15}$-Alkylbenzol ein durchschnittliches Molekulargewicht im Bereich von 231 bis 241 aufweist.

9. Verfahren zum Stabilisieren von pulverisierter Kohle in Heizölmischungen durch Vermischen von Kohle, Öl und einem Tensid, dadurch gekennzeichnet, daß man 30 bis 50 Gew.-Teile pulverisierte Kohle, 70 bis 50 Gew.-Teile Heizöl, nicht mehr als 10 Gew.-Teile zusätzliches Wasser und mindestens 0,1 Gew.-%, bezogen auf die Mischung, einer flüsigen Tensid-Zubereitung, die

(A) eine nichtionische Komponente in Form eines Alkylphenolpolyoxyalkylenethers;

(B) eine anionische Komponente in Form eines Alkanolaminsalzes einer Alkylarylsulfonsäure; und

(C) nicht mehr als 10 Gew.-% eines Lösungsmittels enthält, wobei das Gewichtsverhältnis von (A):(B) zwischen 1:3 und 3:1 liegt, vermischt.

10. Verfahren nach Anspruch 9, dadurch gekennzeichnet, daß die Menge der Tensid-Zubereitung nicht mehr als 1 Gew.-% der Mischung ausmacht.

11. Verfahren nach Anspruch 9 oder 10, dadurch gekennzeichnet, daß die Menge des zugesetzten Wassers 1 bis 5 Gew.-%, bezogen auf die Mischung, beträgt.

12. Verfahren nach einem der Ansprüche 9 bis 11, dadurch gekennzeichnet, daß das Alkanolaminsalz der Alkylarylsulfonsäure aus Mono-, Di- und Tri-$C_{1-3}$-alkanolaminsalzen von $C_{10-15}$-Alkylbenzolsulfonsäuren und Mischungen davon ausgewählt ist.

13. Stabilisierte Mischung aus Kohle und Heizöl, dadurch gekennzeichnet, daß sie 30 bis 50 Gew.-Teile pulverisierte Kohle, 70 bis 50 Gew.-Teile Heizöl, nicht mehr als 10 Gew.-Teile zugesetztes Wasser und mindestens 0,1 Gew.-% einer Tensid-Zubereitung, die

(A) eine nichtionische Komponente in Form eines Alkylphenolpolyoxyalkylenethers;

(B) eine anionische Komponente in Form eines Alkanolaminsalzes einer Alkylarylsulfonsäure; und

(C) nicht mehr als 10 Gew.-% eines Lösungsmittels,

enthält, wobei das Gewichtsverhältnis von (A):(B) zwischen 1:3 und 3:1 liegt, enthält.

14. Mischung nach Anspruch 13, dadurch gekennzeichnet, daß das Alkanolaminsalz der Alkylarylsulfonsäure aus Mono-, Di- und Tri-$C_{1-3}$-alkanolaminsalzen von $C_{10-15}$-Alkylbenzolsulfonsäuren und Mischungen davon ausgewählt ist.

15. Mischung nach Anspruch 13 oder 14, dadurch gekennzeichnet, daß sie als Bestandteil (A) mit durchschnittlich 10 Mol Ethylenoxid kondensiertes Nonylphenol und als Bestandteil (B) das Triethanolaminsalz von $C_{10-15}$-Alkylbenzolsulfonsäure enthält.

**Revendications**

1. Composition tensioactive constituée essentiellement de:
(A) un composant non-ionique alkylphènol polyoxyalkylène éther,
(B) un composant anionique sel d'amine d'acide alkylaryl sulfonique, et
(C) pas plus de 10 pour cent en poids de solvant,
dans laquelle la rapport en poids (A):(B) est entre 1:3 et 3:1, caractérisée en ce que ledit sel d'amine est un sel d'alcanolamine et que la composition tensioactive est liquide.

2. Composition selon la revendication 1, dans laquelle l'alkylphénol polyoxyalkylène éther est choisi dans les produits de condensation des alkylphénols $C_{8-12}$ condensés avec en moyenne de 4 à 12 moles d'oxyde d'alkylène $C_{2-3}$.

3. Composition selon soit la revendication 1, soit la revendication 2, dans laquelle le sel d'alcanolamine d'acide alkylaryl sulfonique est choisi parmi les sels de mono-, di- et tri- alcanolamines $C_{1-3}$ d'acides alkylbenzène sulfoniques $C_{10-15}$, et leurs mélanges.

4. Composition selon l'une quelconque des revendications qui précèdent, dans laquelle le solvant est choisi parmi l'eau, les alcools $C_{1-3}$, le formamide, et leurs mélanges.

5. Composition selon la revendication 3, dans laquelle l'alkylbenzène $C_{10-15}$ a un poids moléculaire moyen dans la gamme de 231 à 335.

6. Composition selon l'une quelconque des revendications qui précèdent, dans laquelle (A) est le nonylphénol condensé avec en moyenne 10 moles d'oxyde d'éthylène et (B) est le sel de triéthanolamine d'acide alkylbenzène sulfonique $C_{10-15}$.

7. Composition selon la revendication 6, dans laquelle le solvant est l'éthanol.

8. Composition selon soit la revendication 6, soit la revendication 7, dans laquelle l'alkylbenzène $C_{10-15}$ a un poids moléculaire moyen dans la gamme de 231 à 241.

9. Méthode pour stabiliser des mélanges de charbon pulvérisé dans du fuel-oil en mélangeant du charbon, du fuel-oil et un tensioactif, caractérisé en ce que ladite méthode comprend de mélanger 30 à 50

10

parties en poids de charbon pulvérisé, 70 à 50 parties en poids de fuel-oil, pas plus de 10 parties en poids d'eau ajoutée et au moins 0,1 pour cent en poids du mélange d'une composition tensioactive liquide comprenant:

(A) un composant non-ionique alkylphénol polyoxyalkylène éther,

(B) un composant anionique sel d'alcanolamine d'acide alkylaryl sulfonique, et

(C) pas plus de 10 pour cent en poids de solvant,

dans laquelle le rapport en poids (A):(B) est entre 1:3 et 3:1.

10. Méthode selon la revendication 9, dans laquelle la quantité de composition tensioactive n'est pas plus de 1% en poids du mélange.

11. Méthode selon soit la revendication 9, soit la revendication 10, dans laquelle la quantité d'eau ajoutée est de 1 à 5 pour cent en poids du mélange.

12. Méthode selon l'une quelconque des revendications de 9 à 11, dans laquelle le sel d'alcanolamine d'acide alkylaryl sulfonique est choisi parmi les sels de mono-, di- et tri- alcanolamines $C_{1-3}$ d'acides alkylbenzène sulfoniques $C_{10-15}$, et leurs mélanges.

13. Mélange stabilisé de charbon et de fuel-oil, caractérisé en ce qu'il comprend 30 à 50 parties en poids de charbon pulvérisé, 70 à 50 parties en poids de fuel-oil, pas plus de 10 parties en poids d'eau ajoutée, et au moins 0,3 pour cent en poids de composition tensioactive comprenant:

(A) un composant non-ionique alkylphénol polyoxyalkylène éther,

(B) un composant anionique sel d'alcanolamine d'acide alkylaryl sulfonique, et

(C) pas plus de 10 pour cent en poids de solvant,

dans laquelle le rapport en poids (A):(B) est entre 1:3 et 3:1.

14. Mélange selon la revendication 13, dans lequel le sel d'alcanolamine d'acide alkylaryl sulfonique est choisi parmi les sels de mono-, di- et tri- alcanolamines $C_{1-3}$ d'acides alkylbenzène sulfoniques $C_{10-15}$, et leurs mélanges.

15. Mélange selon la revendication 13 ou la revendication 14, dans lequel (A) est le nonylphénol condensé avec en moyenne 10 moles d'oxyde d'éthylène et (B) est le sel de triéthanolamine d'acide alkylbenzène sulfonique $C_{10-15}$.